# EUROPÄISCHE PATENTANMELDUNG

(11) **EP 3 670 858 A1**
(43) Veröffentlichungstag der Anmeldung: **24.06.2020**
(21) Anmeldenummer: 19193365.4
(22) Anmeldetag: 23.08.2019
(51) Int. Cl.: F01P 7/14, F16K 31/53, F01P 7/16, F16K 11/12, F16K 11/18, F16K 11/20

(54) **MOTORTEMPERIEREINHEIT ZUM PUMPEN UND/ODER VERTEILEN EINES WÄRMETRÄGERS**

(30) Priorität: 18.12.2018 DE 102018132659
(71) Anmelder: Handtmann Systemtechnik GmbH & Co. KG, 88400 Biberach/Riß (DE)
(72) Erfinder: Coelsch, Stefan, 88400 Biberach (DE); Ströbele, Hans Jürgen, 89155 Erbach (DE)
(74) Vertreter: Otten, Roth, Dobler & Partner mbB Patentanwälte

(57) **Zusammenfassung**

Es wird eine Motortemperiereinheit, insb. Motorkühleinheit, zum Pumpen und/oder Verteilen eines flüssigen Wärmeträgers, insb. eines Kühlwassers, eines Motors wie eines Elektromotors oder einer Verbrennungskraftmaschine, mit wenigstens einem Stellorgan (6) zur Steuerung des Wärmeträgers des Motors, wobei wenigstens ein Stellantrieb (7) zum Antreiben/Verstellen des Stellorgans (6) vorgesehen ist, vorgeschlagen, die neue und/oder zusätzliche Funktionalitäten realisieren und/oder platzsparend umgesetzt werden kann und die insbesondere wirtschaftlich günstig herstellbar ist. dies wird erfindungsgemäß dadurch erreicht,
dass das Stellorgan (6) wenigstens ein erstes Stellglied (12) und ein zweites Stellglied (13) umfasst und dass ein erstes Betätigungselement (15) zum Betätigen des ersten Stellglieds (12) konzentrisch zu einem zweiten Betätigungselement (15, 16) zum Betätigen des zweiten Stellglieds (13) angeordnet ist, so dass das erste Betätigungselement (15) und das zweite Betätigungselement (15, 16) eine gemeinsame Längsachse und/oder Drehachse aufweisen.

## Beschreibung

Die Erfindung betrifft eine Motortemperiereinheit, insb. Motorkühleinheit, zum Pumpen und/oder Verteilen eines flüssigen Wärmeträgers, insb. eines Kühlwassers, eines Motors wie eines Elektromotors oder einer Verbrennungskraftmaschine, mit wenigstens einem Stellorgan zur Steuerung des Wärmeträgers des Motors nach dem Oberbegriff des Anspruchs 1.

### Stand der Technik

Moderne Fahrzeugmotoren, insb. Verbrennungskraftmaschinen wie z.B. Viertaktmotoren, oder Elektromotoren insb. auch mit Brennstoffzellen zusammen, in Fahrzeugen wie PKWs oder LKWs werden bis auf wenige Ausnahmen flüssigkeitsgekühlt bzw. mit Wasser temperiert/erwärmt, wobei in der Regel ein Gemisch aus Wasser und einem Frost- und Korrosionsschutzmittel als Kühlflüssigkeit als sog. Kühlwasser dient.

Ein Wasser- bzw. Kühlmittelkühler, der sog. "Kühler", bzw. Wärmetauscher ist meist an der Front des Fahrzeuges angebracht, wo ein Luftstrom das durchfließende Kühlmittel abkühlt. Von dort wird das Kühlmittel mit einer Kühlmittelpumpe über Schläuche durch den Motor gepumpt (Zylinderkopf und Motorblock). Thermisch stark beanspruchte Anbauteile des Motors wie Abgasturbolader, Generator oder der Abgasrückführkühler können mit in den Kühlmittelkreislauf eingebunden sein. In modernen Motoren werden häufig elektrische Kühlmittelpumpen (Leistung ∼ 200 W) mit regelbarer Förderleistung eingesetzt. Sie haben eine wesentlich geringere Leistungsaufnahme als mechanisch angetriebenen Pumpen und ermöglichen dadurch einen geringeren Kraftstoffverbrauch.

Der Kühlkreislauf, und damit die Motortemperatur, wird u.a. durch ein Stellorgan geregelt, früher üblicherweise ein Thermostat, das heute zum Teil bereits durch ein Drehschieber ersetzt wird. Letzteres ist aktiv regelbar, insb. über die Fahrzeugelektronik bzw. einen Elektromotorantrieb.

Solange der Motor nicht seine Betriebstemperatur erreicht hat, ist das Stellorgan/Thermostatventil geschlossen, und die Kühlflüssigkeit zirkuliert meist nur über Motor, Wasserpumpe und Heizungswärmeübertrager. Öffnet das Stellorgan bzw. der Thermostat, so wird der Haupt-Wasserkühler mit in den Kreislauf eingeschlossen, und die eigentliche Kühlung setzt ein. Das Stellorgan/Thermostatventil öffnet je nach Fahrzeug und Motor üblicherweise zwischen ca. 75°C und ca. 88°C. Es gibt mittlerweile zunehmend auch Motoren mit mehreren Kreisläufen, die unterschiedlichste Temperaturen aufweisen, und auch kennfeldgesteuerte elektrische Stellorgane bzw. Thermostate.

Da sich die Kühlflüssigkeit bei Erwärmung ausdehnt, steigt der Druck im Kühlsystem. Um diesen Effekt auszugleichen, ist ein Ausgleichsbehälter/Ausdehnungsgefäß in den Kühlkreislauf integriert, der das überschüssige Kühlmittel aufnimmt und bei Bedarf wieder abgibt. Durch das Erhöhen des Systemdruckes steigt gleichzeitig der Siedepunkt des Kühlmittels.

Das zuvor genannte Motorkühlsystem ist nicht immer das einzige Kühlsystem in einem Motor bzw. Fahrzeug. Zusätzlich können noch separate Systeme z.B. für die Ladeluft, das Motoröl, das Getriebeöl, das Lenkgetriebeöl und/oder den Kraftstoff eingebaut sein. Bei Hybridfahrzeugen existiert meist ein weiteres Kühlsystem zur Kühlung von Elektromotoren/Generatoren und deren Leistungselektronik, z.B. Inverter, Umrichter, etc..

Oft sind die Pumpe und das Stellorgan in einem gemeinsamen Gehäuse untergebracht und direkt am Motor, insb. Zylinderkopf, fixiert, wobei üblicherweise der Zylinderkopf das Gegenstück bzw. das zweite Gehäuseelement zu einem Kühlmittelgehäuseelement bildet und der Antrieb der Kühlmittelpumpe über den Motor bzw. die Nockenwelle mit Zahnriemen erfolgt. Auch sind vom Motor separate Pumpgehäuse im Einsatz, wobei meist ein separater Elektromotor als Antrieb der Kühlmittelpumpe verwendet wird.

Diese Baueinheit, ob separat oder direkt an den Motor/Zylinderkopf angeflanscht, wird auch als sog. Kühlmittelregeleinheit oder Kühlmittelverteilermodul bezeichnet und weist als zentrale Komponenten die Kühlmittelpumpe sowie das Stellorgan auf, insb. Drehschieber oder einen oder zwei Thermostate. Zur Verteilung bzw. Steuerung/Regelung der o.g. verschiedensten Kühlmittelströme bzw. Teilkreisläufe sind diverse Kühlkanäle und Anschlüsse bzw. Öffnungen für das Kühlwasser/-mittel integriert. Als Material wird vielfach Metall, insb. Aluminium, oder Kunststoff, insb. sog. Hochleistungskunststoffe, eingesetzt.

Es ist jedoch von Nachteil, dass die unterschiedlichsten Kühlmittelströme bzw. Teilkreisläufe und diverse Kühlkanäle sowie Anschlüsse bzw. Öffnungen bislang nur bedingt separat regelbar sind oder nur mit einem sehr großen konstruktiven Aufwand. So sind z.B. zwei Thermostate einerseits aufwändig bei der Herstellung des Moduls und benötigen relativ viel Platz. Andererseits sind diese Thermostate nicht aktiv regelbar und somit nicht an unterschiedlichste Betriebsbedingungen des Verbrennungsmotors bzw. Fahrzeug exakt/flexibel anpassbar.

Auch besteht im Laufe des (langjährigen) Betriebs die Gefahr der Undichtigkeit durch die diversen Anschlussstellen der Thermostate bzw. Stellorgane und/oder Durchbrüche für die außen am Modul angeordneten Antreibe für den Drehschieber bzw. das Stellorgan oder die Pumpe etc..

### Aufgabe und Vorteile der Erfindung

Aufgabe der Erfindung ist es demgegenüber, eine Motortemperiereinheit, insb. mit einem Wärmeträger/Kühlmittel eines Fahrzeugs, der eingangs genannten Art vorzuschlagen, die neue und/oder zusätzliche Funktionalitäten realisieren und/oder platzsparend umgesetzt werden kann und die insbesondere wirtschaftlich günstig herstellbar ist.

Diese Aufgabe wird, ausgehend von einer Motortemperiereinheit der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Motortemperiereinheit dadurch aus, dass das Stellorgan wenigstens ein erstes Stellglied und ein zweites Stellglied umfasst und dass ein erstes Betätigungselement zum Betätigen des ersten Stellglieds konzentrisch zu einem zweiten Betätigungselement zum Betätigen des zweiten Stellglieds angeordnet ist, so dass das erste Betätigungselement und das zweite Betätigungselement eine gemeinsame Längsachse und/oder Drehachse aufweisen.

Mit Hilfe dieser Maßnahme wird erreicht, dass die Motorkühleinheit besonders platzsparend bzw. relativ klein ausgeführt werden kann und zudem noch neue bzw. erweitere Funktionalitäten realisiert werden können. So können mit den zwei Stellgliedern des Stellorgans mindestens zwei separate Funktionalitäten bzw. Kühlfunktionen verwirklicht werden. Hiermit ergeben sich neue und erweitere Möglichkeiten bei der Steuerung des Kühlfluides, insb. in Bezug auf die Steuerung des Kühlmittels eines Fahrzeugmotors mit diversen Motorkomponenten. Dementsprechend können unterschiedliche Komponenten unterschiedlich gekühlt werden und somit unterschiedliche Betriebstemperaturen aufweisen. Beim Einsatz für ein Verbrennungsmotor, insbesondere in einem Fahrzeug, kann in vorteilhafter Weise das Motoröl weniger wie andere Komponenten des Motors gekühlt werden, so dass das Motoröl etwas wärmer und somit dünnflüssiger ist. Hierdurch kann der Motor leichter laufen und somit kann Energie gespart werden.

Beispielsweise können die beiden Stellglieder unabhängig voneinander betrieben werden. Durchflussmengen und/oder Öffnungsquerschnitte des jeweiligen Kanals können gemäß der Erfindung individuell und betriebsabhängig eingestellt und/oder verändert bzw. kontrolliert werden. Entsprechend können neue Betriebsbedingungen verwirklicht werden.

Darüber hinaus ist lediglich ein gemeinsamer Durchgang bzw. Ausnehmung in der Motorkühleinheit notwendig, um die beiden Stellglieder zu betätigen bzw. anzutreiben. Hiermit reduziert sich der konstruktive als auch der dichtungstechnische und somit der wirtschaftliche Aufwand. Dies minimiert auch die Gefahr bzgl. dem Auftreten von Undichtigkeiten im Laufe des langjährigen Betriebs.

Beispielsweise kann/können das/die erste und/oder zweite Stellglied längs der Längsachse verstellt bzw. verschoben werden. Vorteilhafterweise ist/sind das erste Betätigungselement und/oder das zweite Betätigungselement drehbar um die Drehachse. Die Abdichtung und somit die Zuverlässigkeit des Durchgangs der Betätigung des Stellorgans durch das Gehäuse der Motorkühleinheit hindurch ist bei einer rotatorischen Verstellung des/der Stellglieder wesentlich vereinfacht bzw. verbessert.

Vorzugsweise ist der Stellantrieb als Antriebsmotor zum Verdrehen des ersten Betätigungselements und/oder zweiten Betätigungselements und/oder des ersten Stellglieds und/oder zweiten Stellglieds ausgebildet. Als Stellantrieb für das Stellorgan bzw. das/die Stellglieder wird vorzugsweise ein Elektromotor mit Rotor und Stator verwendet. Dieser Elektromotor wird in vorteilhafter Weise elektrisch bzw. elektronisch gesteuert und damit auch das Stellorgan. Vorteilhafterweise wird eine Platine bzw. elektrische und/oder elektronische Leiterplatte mit dieser Steuer- bzw. Kontrolleinheit bestückt bzw. ausgestattet.

Beispielsweise können bereits handelsübliche Elektromotoren verwendet werden. Gegebenenfalls ist ein Getriebe oder dergleichen vorgesehen, um z.B. eine vorteilhafte Anpassung von Drehmoment, Drehgeschwindigkeit etc. zu verwirklichen.

In einer vorteilhaften Variante der Erfindung ist wenigstens eine Transformationseinheit zum Transformieren der Drehung eines Antriebselementes des Stellantriebs in eine Linearverstellung des ersten Betätigungselements und/oder zweiten Betätigungselements und/oder des ersten Stellglieds und/oder zweiten Stellglieds vorgesehen. Hierdurch kann wenigsten ein rotatorischer Antriebsmotor verwendet und zudem eine Längsverstellung des/der Stellglieder verwirklicht werden. Beispielsweise umfasst die Transformationseinheit wenigstens ein Gewinde und/oder eine Spindel und/oder ein Kugelgewindetrieb, der auch als sog. "Umlaufspindel" bezeichnet wird, und/oder Planetenrollengewindetrieb oder dergleichen. Bei Letzteren rotieren in vorteilhafter Weise Kugeln bzw. (geschliffene) Planetengewinderollen, die in einer Umlaufmutter zwischen zwei Lochkränzen gefasst sind, um eine spezielle Kugel- bzw. Rollengewindespindel, wodurch sich eine axiale Relativbewegung zwischen Mutter und Spindel ergibt. So rotiert die Gewindespindel, während die Mutter in Umfangsrichtung feststeht und linear verschoben wird. Dieses System kann auch als invertierte Version realisiert werden, bei der sich Planetengewinderollen und Lochkränze axial gemeinsam mit der Schubstange bewegen.

In einer bevorzugten Ausführungsform der Erfindung sind das erste und das zweite Stellglied in Richtung Längsachse/Drehachse betrachtet wenigstens teilweise auf gleicher Höhe und/oder im gleichen Bereich und/oder in gleichem Abstand zum Stellantrieb und/oder in radialer Richtung betrachtet wenigstens teilweise nebeneinander angeordnet. Hiermit kann eine besonders kompakte Anordnung realisiert werden.

Vorteilhafterweise können das erste und das zweite Stellglied in Richtung Längsachse/Drehachse betrachtet hintereinander/nebeneinander und/oder voneinander beabstandet angeordnet werden. Das bedeutet, dass das erste und das zweite Stellglied längs der Längsachse/Drehachse wenigstens teilweise versetzt angeordnet sind bzw. zwischen beiden Stellglieder ein Abstand in Richtung Längsachse/Drehachse vorhanden ist.

Auch kann in vorteilhafter Weise wenigstens ein drittes Stellglied vorgesehen werden, dass zu den zwei Stellgliedern längs der Längsachse/Drehachse wenigstens teilweise versetzt angeordnet ist bzw. das zwischen dem dritten Stellglied und den beiden anderen Stellglieder ein Abstand in Richtung Längsachse/Drehachse vorhanden ist. Hiermit können weitere Steuer-/Kontrollfunktionen platzsparend realisiert werden. Vorteilhafterweise weisen die drei Stellglieder eine (gemeinsame/einzige) Antriebseinheit, insb. mit wenigstens zwei oder drei separaten (elektrischen) Antriebsmotoren auf. Vorzugsweise sind die Antriebsmotoren als vorteilhafte Antriebe gemäß den nachfolgend näher beschriebenen Ausführungsformen verwirklicht.

In einer besonderen Weiterbildung der Erfindung sind wenigstens auf einer ersten Seite einer Trägerplatte und/oder einer elektrischen und/oder elektronischen Leiterplatte/Platine zumindest zwei erste Antriebsspulen einer ersten Statoreinheit und auf einer zweiten, der ersten Seite der Trägerplatte und/oder der Leiterplatte/Platine gegenüberliegend angeordneten, zweiten Seite der Trägerplatte und/oder Leiterplatte/Platine zumindest zwei zweite Antriebsspulen einer zweiten Statoreinheit eines zweiten elektrischen Antriebsmotors angeordnet, wobei der zweite elektrische Antriebsmotor die zweite Statoreinheit und eine zweite Rotoreinheit umfasst. Mit Hilfe dieser Maßnahme wird erreicht, dass der Stellantrieb besonders platzsparend bzw. relativ klein ausgeführt werden kann und zudem noch neue bzw. erweitere Funktionalitäten realisiert werden können. So können mit den zwei elektrischen Antriebsmotoren zwei separate Funktionalitäten bzw. Betätigungen von zwei Stellgliedern verwirklicht werden. Beispielsweise können die beiden Antriebsmotoren unabhängig voneinander betrieben werden.

Drehzahl, Drehmoment und/oder Drehrichtung und auch die gemäß der Erfindung individuell abgestimmt und/oder angesteuert bzw. kontrolliert werden.

Vorzugsweise weist/weisen der/die erste und/oder zweite Rotoreinheit (jeweils) mehrere Permanentmagnete auf, insb. Magnete mit sog. Seltenen Erden. Hierdurch kann eine besonders kompakte und/oder vergleichsweise leistungsstarke Bauweise des Stellantriebs verwirklicht werden. Auch wird der Aufwand für die Ansteuerung bzw. den Betrieb durch die Verwendung von Permanentmagneten minimiert.

Vorteilhafterweise ist die Trägerplatte als Spulenkern, insbesondere Ferritkern, der ersten Antriebsspulen und/oder der zweiten Antriebsspulen ausgebildet. Hiermit kann eine Doppelfunktion, nämlich eine Träger- und eine magnetische Funktion, realisiert werden, was den konstruktiven und wirtschaftlichen Aufwand reduziert.

Beispielsweise ist der Spulenkern als Sinterkern verwirklicht. Das bedeutet, dass der Spulenkern aus Sintermaterial hergestellt ist. Hiermit können nahezu beliebige Formen, insb. auch komplexe Geometrien ohne großen Aufwand kostengünstig hergestellt werden. So kann die Trägerplatte in vorteilhafter Weise alle Spulenkerne der ersten und/oder zweiten Antriebsspulen umfassen. Hierdurch ist eine einstückige Baueinheit als Trägerplatte mit Spulenkernen realisierbar.

In einer vorteilhaften Variante der Erfindung weist die Trägerplatte einen Schichtaufbau bzw. wenigstens zwei Trägerschichten auf. Beispielsweise umfasst eine erste Trägerschicht wenigstens die ersten Antriebsspulen und/oder eine zweite Trägerschicht umfasst die zweiten Antriebsspulen. So können die Trägerschichten in vorteilhafter Weise miteinander verbunden/fixiert, insb. verklebt oder verlötet, werden. Auch kann eine Zwischenschicht, insb. eine Abschirmung bzw. eine Abschirmschicht oder dergleichen, vorgesehen werden und insb. zwischen den wenigstens zwei bzw. der ersten und der zweiten Trägerschicht/en angeordnet werden.

Vorteilhafterweise ist die elektrische und/oder elektronische Leiterplatte als die Trägerplatte ausgebildet und/oder umfasst die Trägerplatte die Leiterplatte. Hiermit kann die Leiterplatte eine Doppelfunktion verwirklichen, was den Aufwand wesentlich reduziert. Zum Beispiel können Spulenkerne der ersten und/oder zweiten Antriebsspulen, insb. als Sinterkerne verwirklicht, auf der Leiterplatte/Platine montiert bzw. fixiert werden. So können die ersten und/oder zweiten Antriebsspulen mit den jeweiligen Spulenkernen als einstückige erste und/oder zweite Montageeinheit auf der jeweiligen Seite der Leiterplatte/Platine befestigt bzw. elektrisch angeschlossen werden. Dies reduziert den Herstellungsaufwand.

Beispielsweise wird die Leiterplatte/Platine mit den ersten und/oder zweiten Antriebsspulen und/oder deren Spulenkernen bestückt. Dies kann wirtschaftlich günstig verwirklicht werden und ist zudem sehr platzsparend.

Vorteilhafterweise umfasst die Leiterplatte wenigstens eine elektrische und/oder elektronische Kontrolleinheit zum Kontrollieren des ersten und/oder zweiten Antriebsmotors. Vorzugsweise sind eine Kontrolleinheit und/oder die ersten Antriebsspulen und/oder die zweiten Antriebsspulen und/oder Spulenkerne der Antriebsspulen und/oder erste Trägerschicht und/oder zweite Trägerschicht als Bestückung der Leiterplatte/Platine ausgebildet. So sind diese vorgenannten Bauteile entsprechend einzeln oder im Verbund auf/mit der Leiterplatte bzw. der Trägerplatte fest verbunden und/oder verdrahtet bzw. verlötet. Hierdurch können diese Bauteile mit bereits vorhandenen Fertigungsverfahren montiert werden, was besonders wirtschaftlich günstig ist. Die ersten und/oder zweiten Antriebsspulen können mit oder ohne (Ferrit-) Kerne bzw. Spulenkerne in vorteilhafter Weise jeweils als Einzelspulen oder als sog. kombinierte Kerne oder auch als auf die Leiterplatte gedruckte Spulen/Schaltungen ausgebildet werden.

Generell ist von Vorteil, die ersten Antriebsspulen gemeinsam bzw. konzentrisch um die erste Drehachse und die zweiten Antriebsspulen gemeinsam bzw. konzentrisch um eine zweite Drehachse anzuordnen.

In einer besonderen Weiterbildung der Erfindung ist die erste Drehachse der ersten Rotoreinheit zugleich eine zweite Drehachse der zweiten Rotoreinheit, so dass der erste elektrische Antriebsmotor konzentrisch zum zweiten elektrischen Antriebsmotor angeordnet ist. Hiermit wird der Stellantrieb noch kompakter bzw. platzsparender. Zudem kann in vorteilhafter Weise eine (gemeinsame/einzige) Ausnehmung/Durchbruch bzw. ein Loch in der Leiterplatte als Durchgang/Durchlass für eine Antriebswelle oder Antriebsachse des/der beiden Antriebsmotoren verwendet werden. Gegebenenfalls kann mit dieser Maßnahme auch eine vorteilhafte Fixierung und/oder Positionierung der beiden Rotoreinheiten bzw. der Antriebswellen oder Antriebsachsen erreicht werden.

In einer vorteilhaften Variante der Erfindung ist/sind wenigstens eine erste Antriebswelle des ersten elektrischen Antriebsmotors wenigstens teilweise als erste Hohlwelle und/oder wenigstens eine zweite Antriebswelle des zweiten elektrischen Antriebsmotors wenigstens teilweise als zweite Hohlwelle ausgebildet, wobei eine Antriebsachse als Lagerelement der ersten und/oder zweiten Hohlwelle ausgebildet ist, so dass die erste und/oder zweite Hohlwelle um die Antriebsachse drehbar ist/sind. Hiermit wird/werden die erste und/oder zweite Rotoreinheit in vorteilhafter Weise gelagert, z.B. mittels Gleitlagerung, bzw. positioniert und insbesondere konzentrisch zueinander ausgerichtet. Dies verbessert die Laufruhe bzw. auch die Konzentrizität der beiden Antriebsmotoren.

Vorteilhafterweise ist wenigstens eine Abschirmeinheit zum elektromagnetischen Abschirmen des/der ersten Antriebsmotors/Statoreinheit von dem/der zweiten Antriebsmotor/Statoreinheit vorgesehen. Diese Maßnahme verbessert den unabhängigen bzw. individuellen Betrieb der beiden Antriebsmotoren, da diese sich durch die Abschirmung nicht bzw. nur sehr wenig gegenseitig beeinflussen können.

Gegebenenfalls kann eine unterschiedliche Bestromung der Antriebsspulen als Abschirmung bzw. Kompensation der beiden Statoreinheiten/Antriebsmotoren vorgesehen werden, so dass die gegenseitige Beeinflussung reduziert bzw. minimiert wird.

Vorzugsweise umfasst die Leiterplatte wenigsten ein Abschirmelement der Abschirmeinheit. Beispielsweise ist das Abschirmelement als Kurzschlussblech, Metallfolie oder dergleichen ausgebildet. Beispielsweise weist die Leiterplatte einen Schichtaufbau auf, wobei wenigstens ein Abschirmelement als Abschirmschicht in/auf der Leiterplatte angeordnet ist/sind.

Auch kann die gegenseitige Beeinflussung dadurch reduziert bzw. minimiert werden, dass in vorteilhafter Weise die Anzahl der ersten Antriebsspulen nicht gleich der Anzahl der zweiten Antriebsspulen ist und/oder dass in radialer Richtung um die Drehachse betrachtet die ersten Antriebsspulen wenigstens teilweise versetzt zu den zweiten Antriebsspulen angeordnet sind. Beispielsweise sind in radialer Richtung um die Drehachse betrachtet die ersten Antriebsspulen wenigstens in einem ersten Kreisbogensegment/-sektor und die zweiten Antriebsspulen in einem in Bezug auf das erste Kreissektor versetzt angeordneten, zweiten Kreisbogensegment/-sektor angeordnet sind. Gegebenenfalls sind die Spulen der beiden Motoren in radialer Richtung betrachtet jeweils auf unterschiedlichen Hälften angeordnet.

Vorteilhafterweise ist ein erster Abstand der ersten Antriebsspulen in radialer Richtung zur Drehachse betrachtet nicht gleich einem zweiten Abstand der zweiten Antriebsspulen und/oder ist ein erster, auf die erste Drehachse bezogener Außendurchmesser der ersten Antriebsspulen nicht gleich einem zweiten, auf die zweite Drehachse bezogener Außendurchmesser der zweiten Antriebsspulen. Das bedeutet, dass die Antriebsspulen der beiden Motoren unterschiedlich groß ausgeführt werden können, um v.a. ein gegenseitiges Beeinflussen zu reduzieren. Hierbei können auch unterschiedliche Drehmomente bzw. Leistungen der beiden Motoren verwirklicht werden, womit unterschiedliche Stellglieder betätig bzw. beaufschlagt werden können.

Auch können auch unterschiedliche Lasten, die unterschiedliche Stellglieder generieren, zu einer Reduzierung der gegenseitigen Beeinflussung der beiden Antriebsmotoren führen.

Vorteilhafterweise sind wenigstens ein erstes Betätigungselement zum Betätigen eines ersten Stellgliedes und ein zweites Betätigungselement zum Betätigen eines zweiten Stellgliedes vorgesehen, wobei das erste Betätigungselement zwischen dem ersten Antriebsmotor und dem ersten Stellglied angeordnet und das zweite Betätigungselement zwischen dem zweiten Antriebsmotor und dem zweiten Stellglied angeordnet sind.

Vorzugsweise ist das erste Betätigungselement wenigstens teilweise als Hohlwelle und/oder das erste Betätigungselement wenigstens teilweise als Welle ausgebildet ist/sind, wobei die Welle als Lagerelement der Hohlwelle ausgebildet ist, so dass die Hohlwelle um die Welle drehbar ist.

Vorteilhafterweise ist wenigstens eine (erste und/oder zweite) Getriebevorrichtung zum Übersetzen/Untersetzen des ersten und/oder zweiten Antriebsmotors vorgesehen. So sind in vorteilhafter Weise die erste Getriebevorrichtung zwischen dem ersten Antriebsmotor und dem ersten Stellglied/Betätigungselement und die zweite Getriebevorrichtung zwischen dem zweiten Antriebsmotor und dem zweiten Stellglied/Betätigungselement anzuordnen. Hiermit können z.B. unterschiedliche Drehzahlen und/oder Drehmomente bzw. eine vorteilhafte Anpassung dieser Parameter an das jeweilige Stellglied bzw. Antriebsmotor verwirklicht werden.

### Ausführungsbeispiel

Ein bevorzugtes Ausführungsbeispiel der Erfindung ist in der Zeichnung dargestellt und wird anhand der Figuren nachfolgend näher erläutert.

Im Einzelnen zeigt:
- Figur 1: schematisch ein Motorkühlsystem eines Fahrzeugs mit einer Motortemperiereinheit gemäß der Erfindung,
- Figur 2: schematisch ein Ausschnitt eines ersten Stellorgans mit zwei Stellgliedern gemäß der Erfindung in drei verschiedenen Betriebspositionen,
- Figur 3: schematisch ein Ausschnitt eines zweiten Stellorgans mit zwei Stellgliedern gemäß der Erfindung in drei verschiedenen Betriebspositionen und
- Figur 4: schematisch ein Ausschnitt eines dritten Stellorgans mit zwei Stellgliedern gemäß der Erfindung in drei verschiedenen Betriebspositionen.

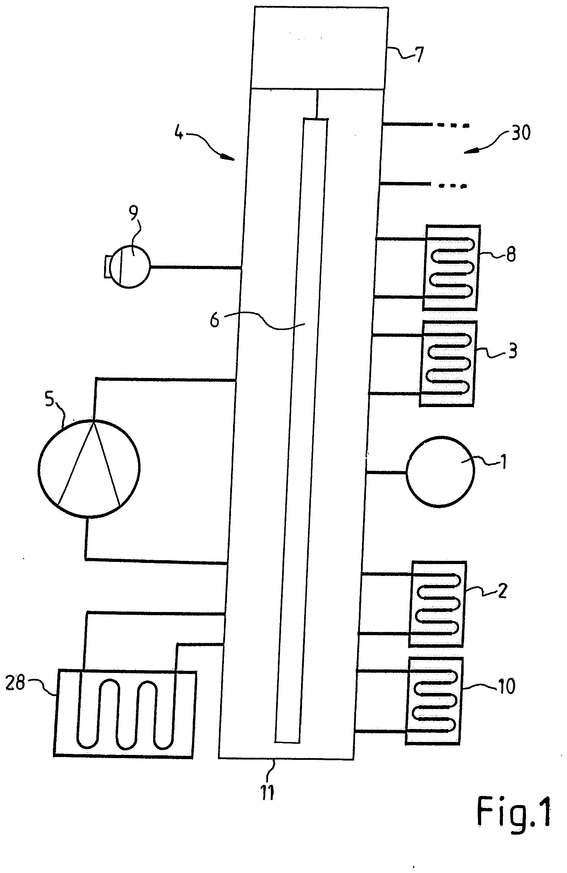

In Figur 1 ist eine Verteilereinheit/-modul 4 mit einigen Komponenten eines Wärme- bzw. Kühlsystems eines Fahrzeugs schematisch dargestellt. So wird ein Motor 1, insb. Verbrennungsmotor oder Elektromotor, mittels Kühlwasser gekühlt. Es kann eine Ölkühlung mittels einem Motorölkühler 2 und einem Getriebeölkühler 3 vorgesehen werden.

An einem nicht näher dargestellten Motorblock bzw. an einem Zylinderkopf ist das Verteilermodul 4 angeordnet bzw. angeflanscht und eine Kühlmittelpumpe 5 wird z.B. über den Motor 1 bzw. dessen Nockenwelle und Riemen oder dergleichen angetrieben. In diesem kann entgegen der in Figur 1 dargestellten Variante auch die Kühlmittelpumpe 5 integriert werden.

Das Verteilermodul 4 umfasst ein in Figur 1 sehr schematisch dargestelltes Stellorgan 6, insb. ein Drehschieber 6 oder dergleichen ist. Das Stellorgan 6 wird mittels einem Stellantrieb 7, insb. einem Elektromotor 7, der mittels einer Kontrolleinheit und wenigstens teilweise in Verbindung mit einer sog. "Boardelektronik" kontrolliert bzw. gesteuert. Hiermit kann eine vorteilhafte kennliniengesteuerte Regelung des Kühlsystems verwirklicht werden. Diverse Sensoren, insb. Temperatursensoren, Drucksensoren oder dergleichen unterstützen die Steuerung.

Die Kühlmittelpumpe 5 pumpt das Kühlwasser in den vorhandenen Kühlkreisläufen u.a. zwischen einem sog. Kühler 28 bzw. einem Hauptwärmetauscher 28 und einem Ausgleichsbehälter 9 sowie der Motorkühlung/Ölkühlung 2 sowie einem Heizungswärmetauscher 10 und ggf. weiteren Komponenten 30 hindurch.

Darüber hinaus kann auch im Fall einer Aufladung des Abgases bzw. einer Turbo-/Kompressorladung auch ein Abgaswärmetauscher 8 bzw. ein Ladeluftkühler oder weitere Komponenten 30 vorgesehen/eingebunden werden.

Im Fall eines Fahrzeugantriebs mit Elektromotor 1 und Akkumulator/Traktionsbatterie sowie ggf. einer Brennstoffzelle zur Stromerzeugung kann auch der Elektromotor 1 z.B. auf eine optimale Betriebstemperatur und die Batterie auf eine andere Betriebstemperatur sowie die Brennstoffzelle auf eine höhere Betriebstemperatur temperiert bzw. gekühlt werden.

In Figur 1 wird deutlich, dass der gesamte Kühlkreislauf somit mehrere Teilkreisläufe umfasst, die unterschiedliche Temperaturen/Temperaturniveaus aufweisen und die im Wesentlichen mittels dem Verteilergehäusemodul 4 bzw. Pumpe 5 und Stellorgan 6 gesteuert/kontrolliert/verteilt werden. Das bedeutet, dass die unterschiedlichen Betriebstemperaturen mittels des Moduls 4 bzw. des Stellorgans 6 durch vorteilhafte Fluidkontrolle/-steuerung realisiert werden.

Das Verteilergehäusemodul 4 kann separat vom Motor 1 angeordnet werden, wobei dieses dann vorzugsweise zwei Gehäuseelemente und den Elektroantrieb 7 als erfindungsgemäßen Stellantrieb 7 umfasst.

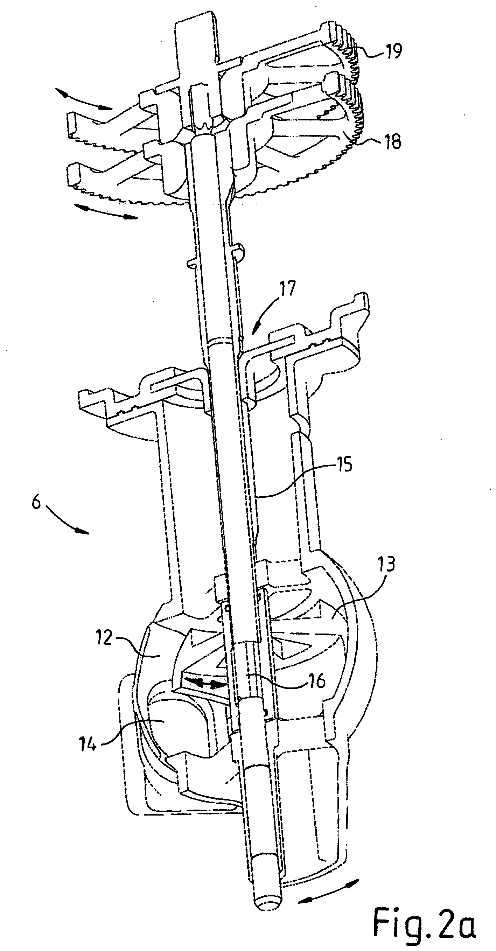

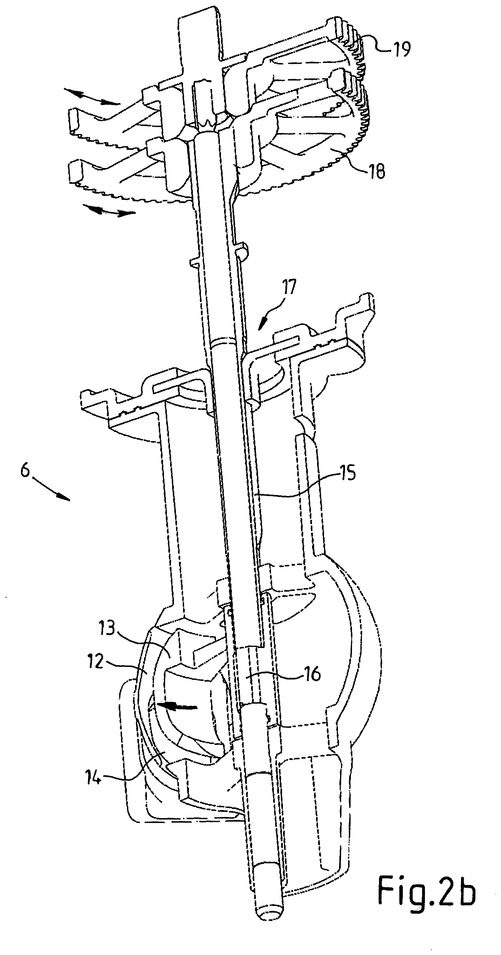

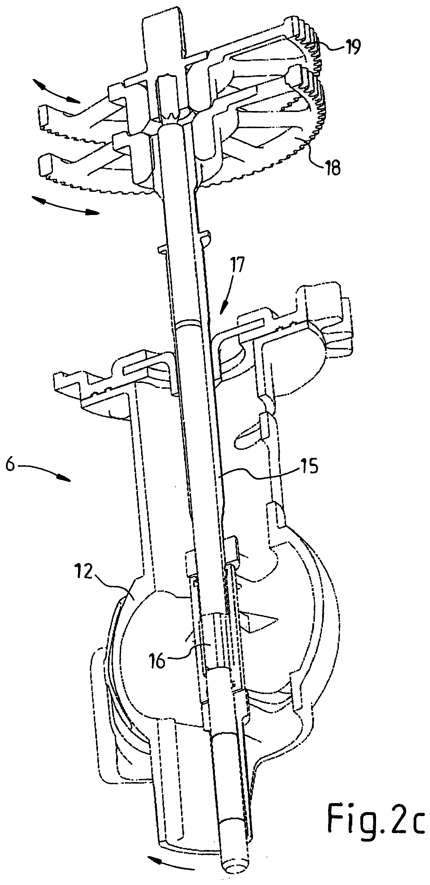

In den Figuren 2 bis 4 sind verschiedene Stellorgane 6 mit je zwei Stellgliedern 12, 13 schematisch jeweils in den Positionen "beide Stellglieder 12, 13 offen" (vgl. Fig. 2a, 3a, 4a) sowie "Haupt-Stellglied 12 offen und Neben-Stellglied 13 geschlossen" (vgl. Fig. 2b, 3b, 4b) sowie "beide Stellglieder 12, 13 geschlossen" (vgl. Fig. 2c, 3c, 4c) schematisch und teilweise geschnitten dargestellt. Es wird deutlich, dass lediglich ein Durchgang 17 bzw. eine Öffnung 17 für die Betätigung der beiden Stellglieder 12, 13 benötigt wird. Hierdurch reduziert sich der Dichtungsaufwand bzw. erhöht sich die Betriebssicherheit der Kühleinheit gemäß der Erfindung.

Gemäß der Erfindung können einzelne Kühlströme bzw. Fluidströme separat geregelt werden. Bei den Stellorganen 6 gemäß den Figuren 2 bis 4 können eine Öffnung 14 bzw. ein Kühlkanal, die/der mit dem Haupt-Stellglied 12 geöffnet werden kann, und zudem ein durch eine Zwischenwand aufgeteilter Kanal bzw. das Neben-Stellglied 13 zusätzlich in der Menge geregelt, vorzugsweise individuell gedrosselt werden. Hiermit können Mengendifferenzen des Kühlfluids bzw. Kühlwassers zwischen zwei geöffneten Kanälen realisiert werden, um z.B. Temperaturdifferenzen in den Kühlkreisläufen (vgl. Fig. 1) zu erzielen. Generell können zur Verwirklichung eines vorteilhaften Kennfeldes bzw. Steuerung/Regelung der Fluidströme unterschiedlichste Arten der Strömungsbeeinflussung verwirklicht werden, so können an einer Dichtkante z.B. Nuten, V-Ausschnitte, Bögen oder sonstige Freiformen angebracht werden.

Vorteilhafterweise können die beiden Stellglieder 12, 13 mittels Betätigungselementen 15, 16 bzw. Wellen 15, 16 verstellt werden. Ein vorteilhafter Antrieb der beiden Stellglieder 12, 13 umfasst zwei Zahnräder 18, 19, die mit einem oder zwei Antriebsmotoren (nicht näher dargestellt) in Wirkverbindung stehen.

Bei der Variante gemäß Figur 2 erfolgt beides Mal eine Rotation der beiden Stellglieder 12, 13. Hierbei ist die Welle 15 zum Verstellen/Betätigen des Stellglieds 12 als Hohlwelle 15 ausgebildet, in der die Welle 16 zum Verstellen/Betätigen des Stellglieds 13 gelagert/halten ist. So definiert ein Öffnungswinkel des Stellgliedes 13, wobei die Drosselwirkung in ein Verhältnis zum Drehwinkel steht.

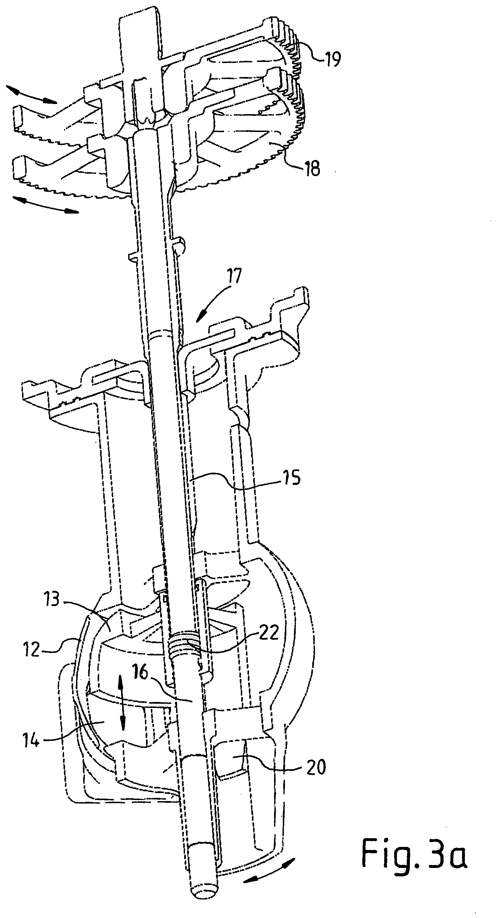

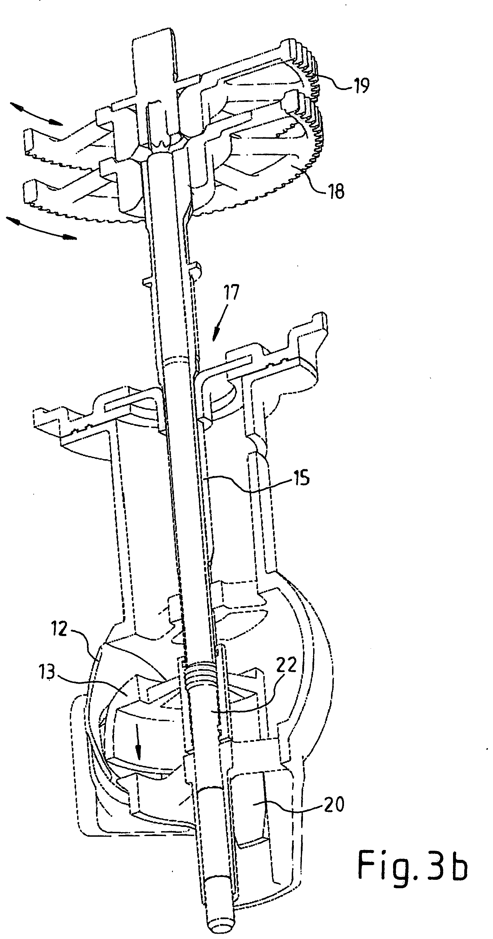

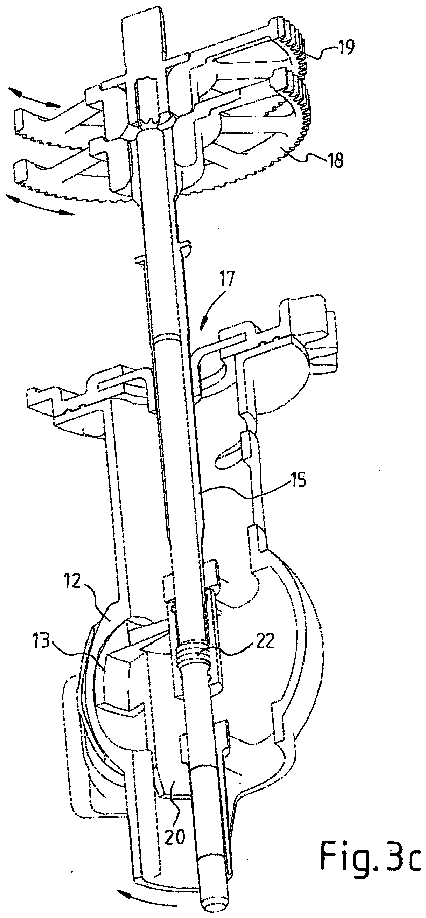

Bei der Variante gemäß Figur 3 erfolgt eine Rotation des Stellglieds 12 und eine Translation bzw. Schiebebewegung des Stellgliedes 13. Hierbei ist die Welle 15 zum Verstellen/Betätigen des Stellglieds 12 wiederum als Hohlwelle 15 ausgebildet, in der die Welle 16 zum Verstellen/Betätigen des Stellglieds 13 gelagert/halten ist. So definiert ein Schiebeweg des Stellgliedes 13 die Drosselwirkung. Hierbei ist in vorteilhafter Weise ein Anschlag 20 bzw. eine Verdrehsicherung 20 vorgesehen, so dass das Stellglied 13 keine Rotation macht.

Ein Gewinde 22 transformiert die Drehbewegung des Zahnrades 19 bzw. der Welle 16 in eine Translation des Stellgliedes 13 um.

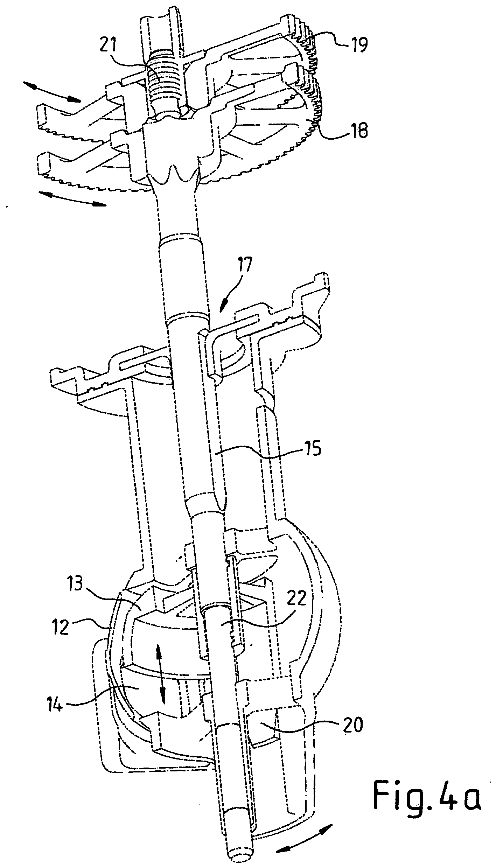

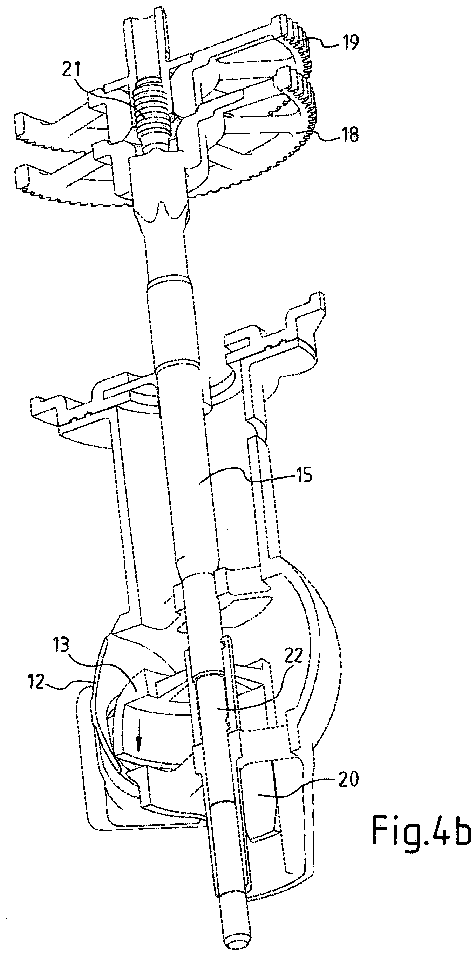

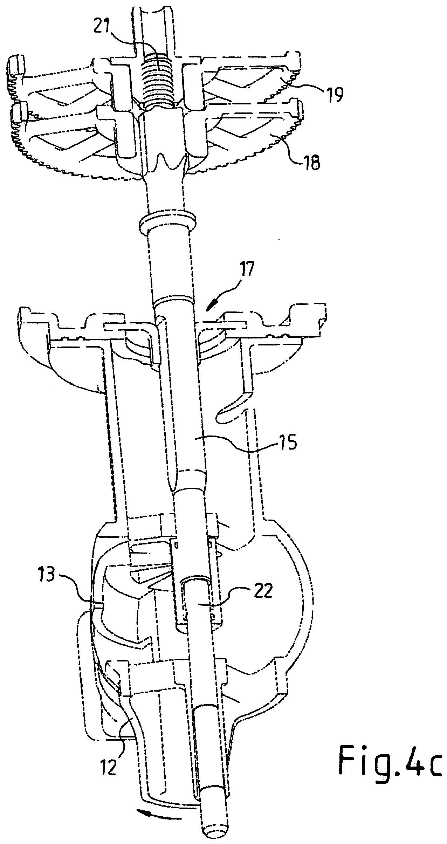

Bei der Variante gemäß Figur 4 erfolgt wiederum eine Rotation des Stellglieds 12 und eine Translation bzw. Schiebebewegung des Stellgliedes 13. Hierbei ist jedoch lediglich eine Welle 15 zum Verstellen/Betätigen des Stellglieds 12 und des Stellglieds 13 vorgesehen, die beide Bewegungen ausführen kann. Hierbei ist die Welle 15 als erstes Betätigungselement und zugleich als zweites Betätigungselement im Sinn der Erfindung ausgebildet.

Der Antrieb umfasst ein Gewinde 21, dieses transformiert die Drehbewegung des Zahnrades 19 in eine Translation des Stellgliedes 13 um. In vorteilhafter Weise ist wiederum der Anschlag 20 bzw. die Verdrehsicherung 20 vorgesehen, so dass das Stellglied 13 keine Rotation mitmacht. Das Stellglied 12 wird hierbei durch Rotation des Zahnrades 18 verstellt (vgl. Figur 4c) .

### Bezugszeichenliste

- 1.: Motor
- 2.: Motorölkühler
- 3.: Getriebeölkühler
- 4.: Modul
- 5.: Pumpe
- 6.: Drehschieber
- 7.: Antrieb
- 8.: Abgaswärmetauscher
- 9.: Behälter
- 10.: Wärmetauscher
- 11.: Gehäuseelement
- 12.: Stellglied
- 13.: Stellglied
- 14.: Öffnung
- 15.: Welle
- 16.: Welle
- 17.: Durchgang/Öffnung
- 18.: Zahnrad
- 19.: Zahnrad
- 20.: Anschlag
- 21.: Gewinde
- 22.: Gewinde
- 28.: Kühler/Wärmetauscher
- 30.: Komponente

## Patentansprüche

1. Motortemperiereinheit (11), insb. Motorkühleinheit (11), zum Pumpen und/oder Verteilen eines flüssigen Wärmeträgers, insb. eines Kühlwassers, eines Motors (1) wie eines Elektromotors oder einer Verbrennungskraftmaschine (1), mit wenigstens einem Stellorgan (6) zur Steuerung des Wärmeträgers des Motors (1), wobei wenigstens ein Stellantrieb (7) zum Antreiben/Verstellen des Stellorgans (6) vorgesehen ist, **dadurch gekennzeichnet, dass** das Stellorgan (6) wenigstens ein erstes Stellglied (12) und ein zweites Stellglied (13) umfasst und dass ein erstes Betätigungselement (15) zum Betätigen des ersten Stellglieds (12) konzentrisch zu einem zweiten Betätigungselement (15, 16) zum Betätigen des zweiten Stellglieds (13) angeordnet ist, so dass das erste Betätigungselement (15) und das zweite Betätigungselement (15, 16) eine gemeinsame Längsachse und/oder Drehachse aufweisen.

2. Motortemperiereinheit nach Anspruch 1, **dadurch gekennzeichnet, dass** das erste Betätigungselement (15) und/oder das zweite Betätigungselement (15, 16) drehbar um die Drehachse ist/sind.

3. Motortemperiereinheit nach einem der vorgenannten Ansprüche, **dadurch gekennzeichnet, dass** der Stellantrieb (7) als Antriebsmotor (7) zum Verdrehen des ersten Betätigungselements (15) und/oder zweiten Betätigungselements (15, 16) und/oder des ersten Stellglieds (12) und/oder zweiten Stellglieds (13) ausgebildet ist.

4. Motortemperiereinheit nach einem der vorgenannten Ansprüche, **dadurch gekennzeichnet, dass** wenigstens eine Transformationseinheit (21, 22) zum Transformieren der Drehung eines Antriebselementes (18, 19) des Stellantriebs (7) in eine Linearverstellung des ersten Betätigungselements (15) und/oder zweiten Betätigungselements (15, 16) und/oder des ersten Stellglieds (12) und/oder zweiten Stellglieds (13) vorgesehen ist.

5. Motortemperiereinheit nach einem der vorgenannten Ansprüche, **dadurch gekennzeichnet, dass** die Transformationseinheit (21, 22) wenigstens ein Gewinde (21, 22) und/oder eine Spindel und/oder ein Planetenrollengewindetrieb umfasst.

6. Motortemperiereinheit nach einem der vorgenannten Ansprüche, **dadurch gekennzeichnet, dass** der Stellantrieb (7) als ein erster, elektrischer Antriebsmotor mit zumindest einer ersten, um eine erste Drehachse drehbarere Rotoreinheit und mit einer ersten, zumindest zwei erste Antriebsspulen umfassenden Statoreinheit ausgebildet ist, wobei eine elektrische und/oder elektronische Leiterplatte wenigstens eine elektrische und/oder elektronische Kontrolleinheit zum Kontrollieren des ersten Antriebsmotors umfasst.

7. Motortemperiereinheit nach einem der vorgenannten Ansprüche, **dadurch gekennzeichnet, dass** wenigstens auf einer ersten Seite der Leiterplatte und/oder einer Trägerplatte zumindest die zwei ersten Antriebsspulen der ersten Statoreinheit und auf einer zweiten, der ersten Seite der Leiterplatte und/oder Trägerplatte gegenüberliegend angeordneten, zweiten Seite der Leiterplatte und/oder Trägerplatte zumindest zwei zweite Antriebsspulen einer zweiten Statoreinheit eines zweiten elektrischen Antriebsmotors angeordnet sind, wobei der zweite elektrische Antriebsmotor die zweite Statoreinheit und eine zweite Rotoreinheit umfasst.

8. Motortemperiereinheit nach einem der vorgenannten Ansprüche, **dadurch gekennzeichnet, dass** die erste Drehachse der ersten Rotoreinheit zugleich eine zweite Drehachse der zweiten Rotoreinheit ist, so dass der erste elektrische Antriebsmotor konzentrisch zum zweiten elektrischen Antriebsmotor angeordnet ist.

9. Motor (1), insb. Elektromotor, Verbrennungskraftmaschine (1) wie Benzinmotor (1) oder Dieselmotor (1), mit einer Motortemperiereinheit (11).

10. Fahrzeug, insbesondere Kraftfahrzeug, mit einem Motor (1) nach dem vorgenannten Anspruch.
